# EUROPÄISCHE PATENTANMELDUNG

(11) **EP 1 467 196 A1**
(43) Veröffentlichungstag der Anmeldung: **13.10.2004**
(21) Anmeldenummer: 03008172.3
(22) Anmeldetag: 08.04.2003
(51) Int. Cl.: G01N 3/08, G01N 33/36

(54) **Verfahren und Vorrichtung zur Messung der Schrumpfung von Einzelfasern aufgrund einer Wärmebehandlung**

(71) Anmelder: TEXTECHNO HERBERT STEIN GMBH & CO. KG, 41066 Mönchengladbach (DE)
(72) Erfinder: Stein, Wolfgang, 41239 Mönchengladbach (DE); Mörschel, Ulrich, 52441 Linnich-Welz (DE)
(74) Vertreter: Dallmeyer, Georg, Dipl.-Ing.

(57) **Zusammenfassung**

Bei einem Verfahren zur Messung des Schrumpfes von Einzelfasern (10) bzw. Filamenten durch Messung der Längenänderung der Einzelfasern vor und nach einer schrumpfauslösenden Wärmebehandlung, ist vorgesehen, das Aufbringen von mindestens einer Einzelfaser (10) im spannungsfreien oder spannungsarmen Zustand auf einen Probenhalter (12), das Messen der Länge der Einzelfaser (10) mit einer optischen Messeinrichtung (4) vor der Wärmebehandlung, das Einbringen des Probenhalters (12) in eine Wärmebehandlungseinrichtung (2), das erneute Messen der Länge der Einzelfaser (10) nach der Wärmebehandlung, und das Berechnen des Schrumpfes der Einzelfaser (10) aufgrund der von der optischen Messeinrichtung (4) ermittelten Messdaten.

## Beschreibung

Die Erfindung betrifft ein Verfahren und eine Vorrichtung zur Messung des Schrumpfes von Einzelfasern nach dem Oberbegriff des Anspruchs 1 bzw. 8.

Ein derartiges Verfahren und eine derartige Vorrichtung soll die Längenänderung von Fasern oder Filamenten infolge einer thermischen bzw. hydrothermischen Behandlung ermitteln. Dazu ist eine erste Längenmessung vor der Wärmebehandlung und eine zweite Längenmessung nach der Wärmebehandlung erforderlich.

Schrumpfprüfungen an Einzelfasern sind derzeit nur durch manuelle Längenvermessung der Fasern vor und nach einer Heißluft- oder Heißwasserbehandlung möglich. Dieses Verfahren ist zeitaufwendig, arbeitsintensiv und relativ ungenau, und die Qualität des Ergebnisses hängt in hohem Maße vom Geschick und der Erfahrung des Laborpersonals ab. Dies gilt für die Längenmessung ebenso wie für die Heißluftbehandlung, die durch Faktoren wie die Öffnungszeit des Heizschrankes, die Einführgeschwindigkeit der aus Einzelfasern bzw. Filamente bestehenden Faserprobe, die Position der Faserprobe im Heizschrank und die Masse der Halterung für die Einzelfasern stark beeinflusst wird.

Der Erfindung liegt die Aufgabe zugrunde, ein Verfahren zur Messung des Schrumpfes von Einzelfasern bzw. Filamenten sowie eine Vorrichtung zu schaffen, bei der die Reproduzierbarkeit der Messergebnisse verbessert ist und der Zeitaufwand für die Durchführung der Messung reduziert ist.

Zur Lösung dieser Aufgabe dienen die Merkmale des Anspruchs 1 bzw. 8.

Die Erfindung sieht in vorteilhafter Weise vor, dass in einem ersten Schritt mindestens eine Einzelfaser im spannungsfreien Zustand auf einem Probenhalter befestigt wird. Dann wird die Länge der in dem Probenhalter gehaltenen Einzelfasern vor der Wärmebehandlung mit einer optischen digitalen Messeinrichtung gemessen. In einem dritten Schritt wird dann der Probenhalter in eine Wärmebehandlungseinrichtung eingebracht. Nach Durchführung der Wärmebehandlung wird erneut die Länge der von dem Probenhalter spannungsfrei oder spannungsarm gehaltenen Einzelfasern mit der optischen Messeinrichtung vermessen. Schließlich wird der Schrumpf jeder Einzelfaser aufgrund der von den optischen Messeinrichtung ermittelten Messdaten berechnet und statistisch ausgewertet. Die ermittelten Messdaten einschließlich der statistischen Auswertungen können in ein Labordatensystem übertragen werden. Die Wärmebehandlung erfolgt vorzugsweise in Heißluft, kann aber auch in Dampf oder in einer heißen Flüssigkeit, z.B. auch in heißem Öl erfolgen. Als spannungsarmer Zustand ist eine Vorspannung der Faser in der Größenordnung zwischen 0,01 bis 0,02 cN/tex zu verstehen.

Die optische Messeinrichtung ermöglicht eine vollautomatische Faserlängenmessung mit hoher Auflösung, so dass eine höhere Genauigkeit und Reproduzierbarkeit der Messergebnisse als bei den bisher bekannten Messverfahren erzielt werden kann.

Bei einem bevorzugten Ausführungsbeispiel ist vorgesehen, dass die von dem Probenhalter gehaltenen Einzelfasern zum Erfassen der Länge flachgedrückt werden. Auf diese Weise ist eine zweidimensionale Messung der Länge der Einzelfasern möglich. In diesem Fall ist als optische Messeinrichtung ein digitaler Scanner verwendbar.

Alternativ können als optische Messeinrichtungen digitale Bildsensoren für das dreidimensionale Erfassen der Einzelfaserlänge verwendet werden.

Bei der optischen Vermessung der Faserlänge hat sich eine spiegelnde Hintergrundfläche als besonders geeignet erwiesen.

Der Probenhalter wird zur Wärmebehandlung vorzugsweise von unten in einen Heizofen eingefahren. Auf diese Weise kann die Heißluftbehandlung mit verbesserter Reproduzierbarkeit durchgeführt werden, wobei gleichzeitig der Zeitaufwand dadurch verringert wird, dass während des Wechsels eines Probenhalters keine Abkühlung der Heizzone in dem Heizofen durch das Öffnen einer Tür eintreten kann. Dadurch, dass der Probenhalter von unten in den Heizofen eingefahren wird, geht bei einem Wechsel des Probenhalters keine Wärme verloren, so dass ein erneutes Aufheizen des Heizschrankes auf die eingestellte Solltemperatur nicht oder nur kurz erforderlich ist.

Anstelle einer Behandlung in Heißluft kann der Schrumpf der Fasern auch durch Heißdampf oder heiße Flüssigkeit erfolgen.

Die mindestens eine Einzelfaser ist auf dem Probenhalter befestigt, der vorzugsweise einen Rahmen bildet, der ca. 10 bis 20 Fasern in paralleler Anordnung aufnehmen kann. Alternativ kann der Probenhalter nur aus zwei orthogonal zu den Einzelfasern verlaufenden Streifen bestehen. Der Abstand zwischen diesen orthogonal zu den Einzelfasern verlaufenden Streifen oder Rahmenteilen definiert die Einspannlänge der Einzelfasern auf dem Probenhalter.

Der Probenhalter besteht aus Papier oder aus einer Kunststoff- oder Metallfolie, wobei die Einzelfasern vorzugsweise an ihren Enden zwischen zwei mit einem Kleber beschichteten Streifen befestigt sind. Die Probenhalter sind Wegwerfteile.

Der Probenhalter hat ein Gewicht von weniger als 5 g, vorzugsweise weniger als 2 g. Wegen der geringen Masse des Probenhalters wird die Temperatur innerhalb des Heizofens beim Einführen der Probe nicht verändert.

Der rahmenartige Probenhalter wird vor dem Einbringen in den Ofen vorzugsweise um eine Achse orthogonal zur Faserachse gefaltet, so dass die mindestens eine Faser eine Schlaufe bildet.

Alternativ kann die schrumpfauslösende Wärmebehandlung auch unter Belastung der Einzelfaser erfolgen, in dem ein Gewicht in die gebildete Schlaufe jeder Einzelfaser eingehängt wird. Auf diese Weise vermittelt die Prüfung entweder eine Aussage über den belastungsfreien Schrumpf oder über den Schrumpf unter Belastung und damit über die Schrumpfkraft oder Schrumpfenergie. Die Gewichte können die Form von kleinen und leichten Drahthäkchen aufweisen.

Ergänzend können aufgrund der von der optischen Messeinrichtung ermittelten Messdaten Parameter der Kräuselstruktur, insbesondere die Anzahl der Kräuselbögen je Längeneinheit und/oder die Kräuselbogenamplitude und/oder die Kräuseldehnung, sowie die Einkräuselung bzw. die Kräuseldehnung berechnet werden. Hierfür ist es zweckmäßig, die Fasern beim Aufbringen auf den rahmenförmigen Probenträger mit einer definierten kleinen Vorspannkraft, vorzugsweise 0,01 oder 0,02 cN/tex, zu belasten.

Die Kräuseldehnung, auch Einkräuselung genannt, ist der relative Längenunterschied zwischen der gestreckten Länge und der gekräuselten Länge der Einzelfaser bei einer Vorspannung von 0,01 bis 0,02 cN/tex.

Hinsichtlich der Vorrichtung wird die Aufgabe durch die Merkmale des Anspruchs 8 gelöst.

Die Erfindung sieht diesbezüglich vor, dass ein Probenhalter die Einzelfaser spannungsfrei oder spannungsarm hält, und dass eine optische digitale Messeinrichtung die Länge der Einzelfaser vor und nach einer Wärmebehandlung misst.

Weitere vorteilhafte Merkmale sind in den Unteransprüchen beschrieben.

Im folgenden wird unter Bezugnahme auf die Zeichnungen ein Ausführungsbeispiel der Erfindung näher erläutert.

Es zeigen:
- Fig. 1: die Vorrichtung zur Messung des Schrumpfes von Einzelfasern bzw. Filamenten,
- Fig. 2: den Probenhalter, und
- Fig. 3: den Probenhalter in gefaltetem Zustand zum Einführen in einen Heizofen.

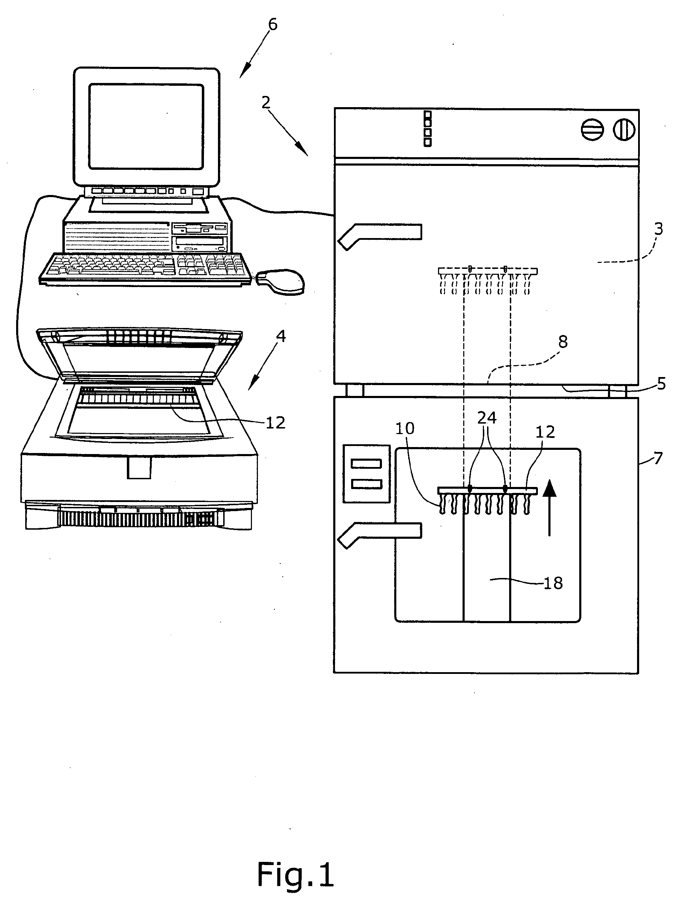

Fig. 1 zeigt eine Vorrichtung zur Messung des Schrumpfes von Einzelfasern 10 bzw. Filamenten mit einem Heizofen 2, einem Flachbettscanner 4 und einem Rechner 6.

Der Heizofen 2 kann zur Wärmebehandlung in einem Temperaturbereich von ca. 30 bis 300° C eingestellt werden. Im unteren Teil des Heizofens 2 ist eine Hubeinrichtung 18 angeordnet mit der ein Probenhalter 12 mit mehreren Einzelfasern 10 nach oben in eine Heizkammer 3 des Heizofens 2 eingefahren werden kann. Hierzu weist die Heizkammer 3 des Heizofens 2 eine Öffnung 8 in dem Boden 5 der Heizkammer auf, durch die der Probenhalter 12 hindurchfahrbar ist. Auf diese Weise ist gewährleistet, dass beim Einführen des Probenhalters 12 mit den Einzelfasern 10 kein Temperaturabfall eintritt, wie dies bei konventionellen Öfen mit Fronttür der Fall ist. Für Schrumpfmessungen an synthetischen Fasern ist dies von erheblicher Bedeutung, da ein Temperaturabfall in der Phase der Einführung des Probenhalter 12 in den Heizofen 2 regelmäßig zu erniedrigten Schrumpfwerten führt, selbst wenn während der Behandlungsdauer die Heizofentemperatur wieder auf den Sollwert ansteigt. Der untere Teil 7 des Heizofens 2 ist mit einer Tür versehen. Der Probenhalter 12 kann auf Haken 24 der Hubeinrichtung 18 aufgehängt werden. Im oberen Teil ist die obere Endposition des Probenhalters 12 gestrichelt dargestellt. Die Heizkammer 3 im oberen Teil kann ebenfalls mit einer Tür verschlossen sein, die allerdings nicht für den Probenwechsel vorgesehen ist, sondern lediglich den Zugang zur Heizkammer 3 im Falle einer Störung oder zwecks Reinigung ermöglichen soll.

Die Hubeinrichtung 18 fährt den Probenhalter 12 mit einer digital geregelten Geschwindigkeit von unten in die Heizkammer hinein. Für die Reproduzierbarkeit der Schrumpfmesswerte ist es dabei auch von erheblicher Bedeutung, dass die Einfahrgeschwindigkeit des Probenhalters 12, die Position des Probenhalters 12 in der Heizkammer und die Solltemperatur des Heizofens 2 exakt reproduzierbar einstellbar sind.

Zur Steuerung der Heizofenfunktionen und zur Übertragung von Messdaten, z.B. der Ofentemperatur oder der Einfahrgeschwindigkeit des Probenhalters 12, ist der Heizofen 2 mit dem Rechner 6 verbunden.

Als Probenhalter 12 dient ein Rahmen aus einer 0,05 mm dicken Metallfolie. Die Rahmenteile 14,16 sind auf einer Seite selbstklebend, wobei zwei Längsstreifen 14a,14b sowie 16a,16b zur Bildung jeweils eines Rahmenteils oder Längsstreifens 14 bzw. 16 mit ihren Klebeseiten gegeneinander geklebt werden. Mehrere, z.B. 10 bis 20 Einzelfasern 10 können zwischen den Längsstreifen 14a,14b bzw. 16a,16b eingeklebt werden. Die Einzelfasern 10 sind mit ihren Enden an den Längsstreifen gehalten, wobei die Fasern in spannungsfreiem oder spannungsarmen Zustand oder - im Fall von gleichzeitiger Ermittlung von Kräuselkennwerten bei der ersten Messung vor der Wärmebehandlung - unter sehr geringer definierter Zugspannung und mehr oder weniger parallel zueinander befestigt werden. Zur Herstellung des Probenhalters 12 kann eine Hilfsvorrichtung vorgesehen sein, mit deren Hilfe der gegenseitige Abstand der Einzelfasern 10 sowie die Ausrichtung der Rahmenteile 14,16 sowie 15 zur Festlegung der Einspannlänge der Einzelfasern eingehalten werden kann. Die Seitenstege 15, die die Rahmenteile 14 und 16 miteinander verbinden, können aus Papier bestehen. Die Rahmenteile 14,16 können mit Löchern 22 versehen werden, in die die Haken 24 der Hubeinrichtung 18 eingreifen können. Der Probenhalter 12 kann auch ohne Seitenstege 15 gebildet werden.

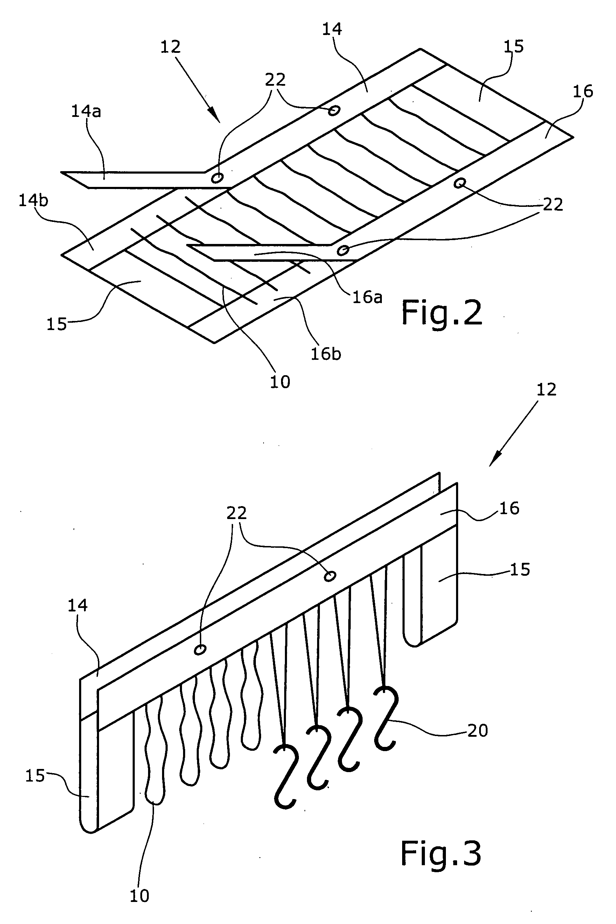

Fig. 3 zeigt den Probenhalter 12 in einem gefalteten Zustand. Der Probenhalter 12 wird vorzugsweise in diesem Zustand in die Heizkammer des Heizofens 2 eingeführt, wobei die Einzelfasern 10 eine Schlaufe bilden. Das geringe Probenhaltergewicht von weniger als 5 bzw. 2 g ist zur Minimierung des Temperaturabfalls ebenfalls von Bedeutung.

Die in Fig. 3 gezeigte Faltung des Probenhalters 12 hat bei der Wärmebehandlung weiterhin den Vorteil, dass in die freien Faserschlaufen der Einzelfasern 10 wahlweise kleine Gewichte 20, z.B. in Form von kleinen und leichten Drahthäkchen, eingehängt werden können. Auf diese Weise vermittelt die Schrumpfmessung entweder eine Aussage über den belastungsfreien Schrumpf oder über den Schrumpf unter Belastung und damit über die Schrumpfkraft oder Schrumpfenergie.

Mit dem Flachbettscanner 4 wird die Längenänderung von Einzelfasern 10 oder Filamenten infolge einer thermischen bzw. oder hydrothermischen Behandlung ermittelt. Dazu ist eine erste Längenmessung vor der Wärmebehandlung und eine zweite Längenmessung nach der Wärmebehandlung erforderlich. Der Flachbettscanner 4 bildet in Verbindung mit dem Rechner 6 eine vollautomatische Faserlängenmessstation. Der Flachbettscanner 4 hat beispielsweise eine Auflösung von 3200 x 1600 dpi oder 12800 dpi interpoliert.

Zur ersten Längenmessung wird der Probenhalter 12 vor der Wärmebehandlung auf die Glasplatte des Flachbettscanners 4, wie in Fig. 1 ersichtlich, aufgelegt und mit einer zweiten ebenen Platte so belastet, dass die in dem Probenhalter 12 gehaltenen Einzelfasern 10 eine zweidimensionale Struktur annehmen. In diesem Zustand werden die Einzelfasern 10 entweder im Auflicht oder im Durchlicht gescannt. Im Falle einer Auflichtmessung wird vorzugsweise eine spiegelnde Hintergrundfläche verwendet. Die spiegelnde Hintergrundfläche ist beispielsweise eine glanzverchromte Oberfläche.

Alternativ ist es allerdings auch möglich, eine Durchlichtmessung durchzuführen, bei der die Einzelfasern mit einer Glasplatte belastet werden. Dies hat den Vorteil, dass die Farbe der Einzelfasern einen deutlich geringeren Einfluss auf die Qualität der Abbildung hat als bei der Auflichtmessung. Aus dem Messsignal des Flachbettscanners 4 werden die Längen der Einzelfasern 10 zwischen den Rahmenteilen 14,16 des Probenhalters 12 berechnet.

Nach erfolgter Wärmebehandlung und Angleichung an das Raumklima wird der Probenhalter 12 mit den Einzelfasern 10 erneut auf den Flachbettscanner 4 gelegt und in gleicher Weise, d.h. im aufgeklappten Zustand des Probenhalters 12, eine zweite Längenmessung durchgeführt. Auch bei dieser Längenmessung müssen die Fasern spannungsfrei gehalten sein oder unter nur sehr geringer Zugspannung stehen, so dass keine Dehnung der Fasersubstanz eintritt. Falls erforderlich kann der Abstand der Rahmenteile 14 und 16 nach Durchtrennen der Seitenstege 15 verkürzt werden. Der Vergleich der Längenmesswerte vor und nach der thermischen Behandlung liefert für jede Einzelfaser 10 den Schrumpfmesswert, der in Prozentwerten angegeben werden kann. Zusätzlich kann der Rechner 6 eine statistische Auswertung durchführen und die Ergebnisse ggf. in ein Labordatensystem übertragen.

Der rahmenförmige Probenhalter 12 ist dann erforderlich wenn auch die Kräuselung ausgewertet wird. Nur bei Schrumpfmessungen reicht es auch, wenn man nur die Rahmenteile 14 und 16 verwendet und auf die Seitenstreifen 15 verzichtet.

Der Rechner 6 ist mit einer Software versehen, die die Messung und Auswertung in Verbindung mit dem Flachbettscanner 4 durchführt.

Die Vorrichtung zur Messung des Schrumpfes von Einzelfasern bzw. Filamenten ist in einem Feinheitsbereich der Fasern zwischen 1 und 200 dtex einsetzbar, wobei unterschiedliche Probenhalter 12 Einzelfasern 10 mit freien Einspannlängen zwischen beispielsweise 20 und 60 mm aufnehmen können.

Der Rechner 6 kann aus den vom Flachbettscanner 4 gelieferten Messdaten nicht nur die Faserlänge sondern auch die Kräuselbogenstruktur hinsichtlich der Anzahl der Kräuselbögen pro Länge, die Kräuselbogenamplituden oder ähnlicher Parameter wie beispielsweise die Kräuseldehnung berechnen.

In diesem Fall sind die Einzelfasern 10 vorzugsweise spannungsarm unter einer Vorspannung von 0,01 bis 0,02 cN/tex in dem Probenhalter 12 mit Seitenstegen 15 gehalten.

## Patentansprüche

1. Verfahren zur Messung des Schrumpfes von Einzelfasern (10) bzw. Filamenten durch Messung der Längenänderung der Einzelfasern vor und nach einer schrumpfauslösenden Wärmebehandlung,
**gekennzeichnet durch**
- das Aufbringen von mindestens einer Einzelfaser (10) im spannungsfreien oder spannungsarmen Zustand auf einen Probenhalter (12),
- das Messen der Länge der Einzelfaser (10) mit einer optischen Messeinrichtung (4) vor der Wärmebehandlung,
- das Einbringen des Probenhalters (12) in eine Wärmebehandlungseinrichtung (2),
- das erneute Messen der Länge der Einzelfaser (10) nach der Wärmebehandlung, und
- das Berechnen des Schrumpfes der Einzelfaser (10) aufgrund der von der optischen Messeinrichtung (4) ermittelten Messdaten.

2. Verfahren nach Anspruch 1, **dadurch gekennzeichnet, dass** der Probenhalter (12) zur Wärmebehandlung von unten in einen als Wärmebehandlungseinrichtung dienenden Heizofen (2) eingefahren wird.

3. Verfahren nach Anspruch 1 oder 2, **dadurch gekennzeichnet, dass** die auf dem Probenhalter (12) befestigte mindestens eine Einzelfaser (10) zum Messen der Länge flachgedrückt wird.

4. Verfahren nach Anspruch 3, **dadurch gekennzeichnet, dass** als optische Messeinrichtung für das zweidimensionale Erfassen der Einzelfaserlänge ein digitaler Scanner (4) verwendet wird.

5. Verfahren nach einem der Ansprüche 1 oder 2, **dadurch gekennzeichnet, dass** als optische Messeinrichtung digitale Bildsensoren für das dreidimensionale Erfassen der Einzelfaserlänge verwendet werden.

6. Verfahren nach einem der Ansprüche 1 bis 5, **dadurch gekennzeichnet, dass** der rahmenartige Probenhalter (12) vorzugsweise um eine Achse orthogonal zu der Längsachse der Einzelfasern (10) gefaltet wird, so dass die mindestens eine Einzelfaser (10) eine Schlaufe bildet, die der schrumpfauslösenden Wärmebehandlung ausgesetzt wird.

7. Verfahren nach einem der Ansprüche 1 bis 6, **dadurch gekennzeichnet, dass** aufgrund der von der optischen Messeinrichtung ermittelten Messdaten Parameter der Kräuselstruktur, insbesondere die Anzahl der Kräuselbögen je Längeneinheit und/oder die Kräuselbogenamplitude und/oder die Kräuseldehnung berechnet werden.

8. Vorrichtung zur Messung des Schrumpfes mindestens einer Einzelfasern (10) bzw. Filamentes, mit
- einer Wärmebehandlungseinrichtung (2),
- einer Messeinrichtung (4) zum Erfassen der Längenänderung der Einzelfaser vor und nach einer Wärmebehandlung, und
- einem Rechner (6) zur Auswertung der Messergebnisse der Messeinrichtung (4),
**dadurch gekennzeichnet**,
- ein Probenhalter (12) die mindestens eine Einzelfaser (10) spannungsfrei oder spannungsarm hält, und
- dass eine optische digitale Messeinrichtung (4) die Länge der Einzelfaser (10) vor und nach der schrumpfauslösenden Wärmebehandlung misst.

9. Vorrichtung nach Anspruch 8, **dadurch gekennzeichnet, dass** die aus einem Heizofen (4) bestehende Wärmebehandlungseinrichtung eine Öffnung (8) im Boden aufweist, durch die der mindestens eine Einzelfaser (10) aufnehmende Probenhalter (12) in den Heizofen (4) von unten einfahrbar ist.

10. Vorrichtung nach Anspruch 8 oder 9, **dadurch gekennzeichnet, dass** die Messeinrichtung (4) zum Erfassen der Längenänderung die Einzelfaser (10) bei der Messung zu einer zweidimensionalen Probe flachdrückt.

11. Vorrichtung nach einem der Ansprüche 8 bis 10, **dadurch gekennzeichnet, dass** die Messeinrichtung zum Erfassen der Längenänderung aus einem Flachbettscanner (4) oder aus mindestens einer digitalen Bildzelle besteht.

12. Vorrichtung nach einem der Ansprüche 8 bis 11, **dadurch gekennzeichnet, dass** eine Hubeinrichtung (18) den Probenhalter (12) mit vorgegebener Geschwindigkeit in den Heizofen (4) transportiert.

13. Vorrichtung nach einem der Ansprüche 8 bis 12, **dadurch gekennzeichnet, dass** der Probenhalter (12) um eine Achse orthogonal zur Faserachse faltbar ist, derart, dass die mindestens eine an dem Probenhalter (12) befestigte Einzelfaser (10) eine Schlaufe bildet, die unbelastet oder mit einem Gewicht (20) belastet der Wärmebehandlung aussetzbar ist.

14. Vorrichtung nach einem der Ansprüche 8 bis 13, **dadurch gekennzeichnet, dass** der Rechner (6) aus den Messdaten der Messeinrichtung auch die Anzahl der Kräuselbögen je Längeneinheit und/oder die Kräuselbogenamplitude und/oder die Kräuseldehnung zum Erfassen der Längenänderung der Einzelfaser (10) berechnet.
